(19) **Europäisches Patentamt / European Patent Office / Office européen des brevets**

(11) **EP 2 199 207 B1**

(12) **EUROPEAN PATENT SPECIFICATION**

(45) Date of publication and mention
of the grant of the patent:
**13.03.2013 Bulletin 2013/11**

(51) Int Cl.:
*B64G 1/36* *(2006.01)*     *G01C 21/16* *(2006.01)*
*G01C 25/00* *(2006.01)*     *G01C 11/00* *(2006.01)*
*B64G 1/10* *(2006.01)*     *B64C 13/16* *(2006.01)*

(21) Application number: **09170643.2**

(22) Date of filing: **18.09.2009**

(54) **Three-dimensional misalignment correction method of attitude angle sensor using single image**

Dreidimensionales Korrekturverfahren von Fehlausrichtungen eines Fluglagenwinkelsensors mithilfe eines Einzelbildes

Procédé de correction du désalignement tridimensionnel du capteur d'angle de position d'équilibre utilisant une seule image

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.12.2008 KR 20080131141**

(43) Date of publication of application:
**23.06.2010 Bulletin 2010/25**

(73) Proprietor: **Korea Aerospace Research Institute Daejeon 305-806 (KR)**

(72) Inventors:
- **Lee, Seon Ho**
  **305-746, Daejeon (KR)**
- **Yong, Ki Lyuk**
  **305-745, Daejeon (KR)**
- **Oh, Shi Hwan**
  **305-755, Daejeon (KR)**
- **Lee, Hye Jin**
  **302-280, Daejeon (KR)**
- **Yim, Jo Ryeong**
  **305-770, Daejeon (KR)**
- **Seo, Hyun Ho**
  **305-806, Daejeon (KR)**
- **Kim, Yong Bok**
  **301-757, Daejeon (KR)**
- **Choi, Hong Taek**
  **305-340, Daejeon (KR)**

(74) Representative: **Lohr, Georg**
**Lohr, Jöstingmeier & Partner**
**Patent- und Rechtsanwälte**
**Junkersstraße 3**
**82178 Puchheim (DE)**

(56) References cited:
**US-A- 5 485 384**     **US-A1- 2005 060 092**
**US-A1- 2008 265 097**     **US-B1- 6 227 496**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a misalignment correction method of an attitude angle sensor, and more particularly to a method for correcting three-dimensional misalignment information of an attitude angle sensor using quantitative extraction by calculating a ground control point from single image information photographed by an image pickup camera installed in a flying object such as a spacecraft or an aircraft.

Description of the Related Art

An attitude angle sensor is generally used to calculate a spatial attitude angle. An initial mounting angle of the attitude angle sensor is measured by a ground test device etc. and is corrected by software.

However, in a spacecraft, misalignment of the attitude angle sensor may occur due to launch vibration, gravity variation, and thermal deformation of structures in an orbital environment. In an aircraft, misalignment may occur due to structural vibration encountered during takeoff and landing of the aircraft or thermal environment characteristics.

Such misalignment deteriorates quality of an image photographed by a camera and therefore appropriate correction thereof is required.

To correct misalignment of the attitude angle sensor, there has been used a method (absolute correction) for correcting three-dimensional misalignment of the attitude angle sensor by calculating a ground control point from stereoscopic image information photographed by a camera or a method (absolute correction) for correcting two-dimensional misalignment of the attitude angle sensor by calculating a ground control point from single image information photographed by a camera.

However, the above-described method has a disadvantage of requiring stereoscopic image information to correct the three-dimensional misalignment, or being able to correct only the two-dimensional misalignment when single image information is used.

US 6,227,496 B1, the closest prior art, discloses an attitude determination system for an artificial satellite. An image processing module for processing star images observed at predetermined time points arithmetically determines direction vectors of the observed stars. Further, the elongations between the direction vectors of plural stars are calculated at two points of time and the elongation vectors corresponding to the two points of time are used to identify the stars, which subsequently permits to calculate an attitude angle.

SUMMARY OF THE INVENTION

Therefore, the present invention has been made in view of the above problems, and it is an object of the present invention to provide a method as claimed in independent claim 1 for correcting three-dimensional misalignment of an attitude angle sensor by calculating a ground control point from single image information photographed by a camera.

In accordance with the present invention, the above and other objects can be accomplished by the provision of a three-dimensional misalignment correction method of an attitude angle sensor using a single image, including calculating a ground control point reference vector, calculating a ground control point observation vector using image information, calculating an attitude error matrix using the ground control point reference vector and the ground control point observation vector, and correcting attitude angle sensor misalignment using the attitude error matrix.

The calculation of the ground control point reference vector may include calculating a ground control point reference vector $\{V^i\}_{ecef}$ (where $i$=1, 2, ..., N) by an equation $\{V^i\}_{ecef} = \{G^i\}_{ecef} - \{R^i\}_{ecef}$ (where $i$=1, 2, ..., N) using a flying object location vector $\{R^i\}_{ecef}$ (where $i$=1, 2,..., N) and a ground control point location vector $\{G^i\}_{ecef}$ (where $i$=1, 2, ..., N) of an earth-centered earth-fixed coordinate system.

The calculation of the ground control point observation vector may include calculating a ground control point observation vector $\{M^i\}_{ecef}$ (where $i$=1, 2, ..., N) by an equation $\{M^i\}_{ecef} = \{L^i\}_{ecef} + \{P^i\}_{ecef}$ (Where $i$=1, 2, ..., N) using a flying object camera line-of-sight vector $\{L^i\}_{ecef}$ (where $i$=1, 2, ..., N) and a relative vector $\{P^i\}_{ecef}$ (where $i$=1, 2, ..., N) of an earth-centered earth-fixed coordinate system.

The calculation of the attitude error matrix includes calculating an attitude error matrix $C_{misalign}$ using the ground control point reference vector and the ground control point observation vector.

The correction of the attitude angle sensor misalignment includes calculating an attitude angle sensor mounting matrix $\widetilde{C}_{body}^{sensor}$ after correction by an equation $\widetilde{C}_{body}^{sensor} = C_{body}^{sensor} C_{misalign}$ by correcting the calculated attitude error matrix $C_{misalign}$ in an attitude angle sensor mounting matrix $C_{body}^{sensor}$ before correction.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is a flow chart illustrating a three-dimensional misalignment correction method of an attitude angle sensor using a single image according to the present invention;

FIG. 2 is a view illustrating ground control point reference vectors used in a three-dimensional misalignment correction method of an attitude angle sensor using a single image according to the present invention; and

FIG. 3 is a view illustrating ground control point observation vectors used in a three-dimensional misalignment correction method of an attitude angle sensor using a single image according to the present invention.

## DETAILED DESCRIPTION OF THE INVENTION

Hereinafter, exemplary embodiments of the present invention will be described in detail with reference to the accompanying drawings.

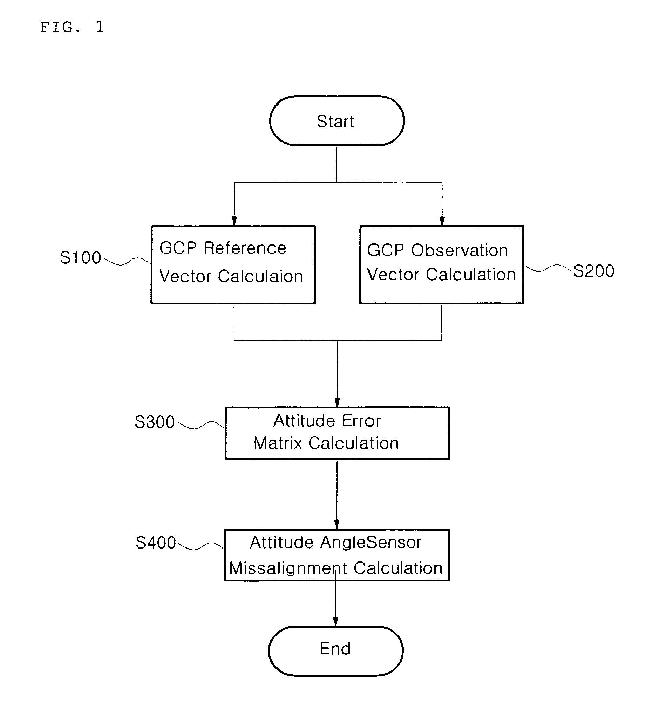

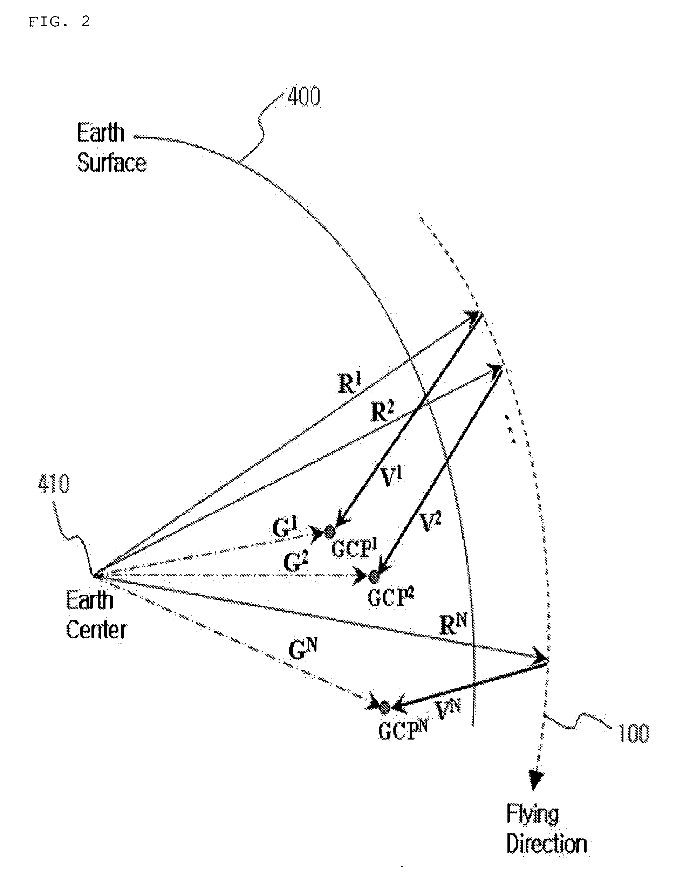

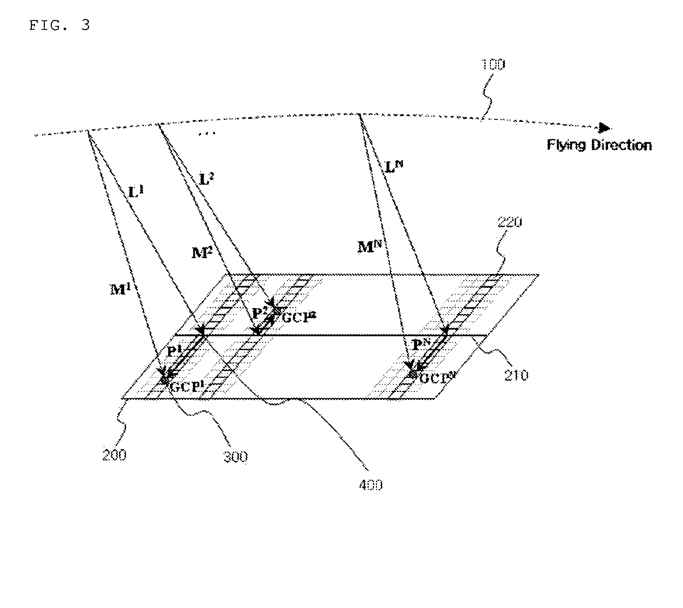

FIG. 1 is a flow chart illustrating a three-dimensional misalignment correction method of an attitude angle sensor using a single image according to the present invention, FIG. 2 is a view illustrating ground control point reference vectors used in a three-dimensional misalignment correction method of an attitude angle sensor using a single image according to the present invention, and FIG. 3 is a view illustrating ground control point observation vectors used in a three-dimensional misalignment correction method of an attitude angle sensor using a single image according to the present invention.

As illustrated in FIG. 1, a three-dimensional misalignment correction method of an attitude angle sensor using a single image includes ground control point (GCP) reference vector calculation (step S100), GCP observation vector calculation (step S200), attitude error matrix calculation (step S300), and attitude angle sensor misalignment correction (step S400).

As illustrated in FIG. 2, GCP reference vectors $V^1$, $V^2$, ..., $V^N$ may be expressed by a vector difference between location vectors $R^1$, $R^2$, ..., $R^N$ from an earth center 410 to a flying object moving in a flying direction 100 and location vectors $G^1$, $G^2$, ..., $G^N$ from the earth center 410 to GCPs $GCP^1$, $GCP^2$, ..., $GCP^N$.

GCP observation vectors $M^1$, $M^2$, ..., $M^N$ may be expressed, as illustrated in FIG. 3, by a vector sum of camera line-of-sight (LOS) vectors $L^1$, $L^2$, ..., $L^N$ of a flying object moving in a flying direction 100 and relative vectors $P^1$, $P^2$, ..., $P^N$. The relative vectors $P^1$, $P^2$, ..., $P^N$ are vectors from a point 400 at which an image center line 210 and LOS vectors on a CCD line 220 meet to a GCP 300 on an image 200.

In the GCP reference vector calculation (step S100), the GCP reference vectors $V^1$, $V^2$, ..., $V^N$ are calculated using a vector difference between the flying object location vectors $R^1$, $R^2$, ..., $R^N$ and the GCP location vectors $G^1$, $G^2$, ..., $G^N$.

A GCP reference vector $\{V^i\}_{ecef}$ where $i$=1, 2, ..., N) may be expressed by the following Equation 1 using a flying object location vector $\{R^i\}_{ecef}$ (where $i$=1, 2, ..., N) and a GCP location vector $\{G^i\}_{ecef}$ where $i$=1, 2, ..., N) of an earth-centered earth-fixed (ECEF) coordinate system.

[Equation 1]

$$\left\{V^i\right\}_{ecef} = \left\{G^i\right\}_{ecef} - \left\{R^i\right\}_{ecef} \ (\text{where } i = 1,2,...,N)$$

In the GCP observation vector calculation (step S200), the GCP observation vectors $M^1$, $M^2$, ..., $M^N$ are calculated by a vector sum of the flying object camera LOS vectors $L^1$, $L^2$, ..., $L^N$ and the relative vectors $P^1$, $P^2$, ..., $P^N$ from the flying object camera LOS vectors to the GCPs.

Using a conversion matrix $C_{cam}^{body}$ from a camera coordinate system to a flying object body coordinate system, a conversion matrix $C_{body}^{eci}$ from the body coordinate system to an inertia coordinate system, and a conversion matrix

$C_{eci}^{ecef}$ from the inertia coordinate system to the ECEF coordinate system, a camera LOS vector $\{L^i\}_{ecef}$ (where $i$=1, 2, ..., N) of the ECEF coordinate system may be expressed as follows.

[Equation 2]

$$\{L^i\}_{ecef} = C_{eci}^{ecef} C_{body}^{eci} C_{cam}^{body} \{L^i\}_{cam} \quad (\text{where } i = 1,2,...,N)$$

Using a relative vector $\{P^i\}_{image}$ (where $i$=1, 2, ..., N) from a crossing point of a camera LOS vector and an image to a GCP and a conversion matrix $C_{image}^{ecef}$ from an image coordinate system to the ECEF coordinate system, a relative vector $\{P^i\}_{ecef}$ (where $i$=1, 2, ..., N) of the ECEF coordinate system may be expressed as follows.

[Equation 3]

$$\{P^i\}_{ecef} = C_{image}^{ecef} \{P^i\}_{image} \quad (\text{where } i = 1,2,...,N)$$

A GCP observation vector $\{M^i\}_{ecef}$ (where $i$=1, 2, ..., N) may be expressed by the following Equation 4 using the camera LOS vector $\{L^i\}_{ecef}$ where $i$=1, 2, ..., N) and the relative vector $\{V^i\}_{ecef}$ where $i$=1, 2, ..., N) of the ECEF coordinate system.

[Equation 4]

$$\{M^i\}_{ecef} = \{L^i\}_{ecef} + \{P^i\}_{ecef} \quad (\text{where } i = 1,2,...,N)$$

In the attitude error matrix calculation (step S300), an attitude error matrix is calculated using the GCP reference vector and the GCP observation vector.

In this case, an attitude error matrix $C_{mtsahgn}$ may be calculated using an existing three-dimensional attitude error calculation algorithm such as TRIAD or QUEST.

In the attitude angle sensor misalignment correction (step S400), an attitude error is eliminated by correcting three-dimensional misalignment of an attitude angle sensor using the calculated attitude error matrix.

An attitude angle sensor mounting matrix $\widetilde{C}_{body}^{sensor}$ after correction may be expressed by the following Equation 5 by correcting the attitude error matrix $C_{misalign}$ in an attitude angle sensor mounting matrix $C_{body}^{sensor}$ before correction.

[Equation 5]

$$\widetilde{C}_{body}^{sensor} = C_{body}^{sensor} C_{misalign}$$

As apparent from the above description, three-dimensional misalignment calculation is possible using single image information photographed by a camera, as opposed to a misalignment correction method using conventional stereoscopic image information.

Although the exemplary embodiments of the present invention have been disclosed for illustrative purposes, those skilled in the art will appreciate that various modifications, additions and substitutions are possible, without departing from the scope of the invention as disclosed in the accompanying claims.

**Claims**

1. A three-dimensional misalignment correction method of an attitude angle sensor using a single image, the method comprising:

   - calculating a ground control point reference vector $\{V^i\}_{ecef}$;
   - calculating a ground control point observation $\{M^i\}_{ecef}$ vector using image information;
   - calculating an attitude error matrix $C_{misalign}$ using the ground control point reference vector $\{V^i\}_{ecef}$ and the ground control point observation vector $\{M^i\}_{ecef}$; and
   - correcting attitude angle sensor misalignment using the attitude error matrix,

   **characterized in that**
   the correction of the attitude angle sensor misalignment includes calculating an attitude angle sensor mounting matrix $\widetilde{C}_{body}^{sensor}$ after correction by an equation $\widetilde{C}_{body}^{sensor} = C_{body}^{sensor} C_{misalign}$ by correcting the calculated attitude error matrix $C_{misalign}$ in an attitude angle sensor mounting matrix $C_{body}^{sensor}$ before correction.

2. The three-dimensional misalignment correction method according to claim 1, wherein the calculation of the ground control point reference vector includes calculating a ground control point reference vector $\{V^i\}_{ecef}$ (where i=1,2,..., N) by an equation $\{V^i\}_{ecef} = \{G^i\}_{ecef} - \{R^i\}_{ecef}$ (where i=1,2,...,N) using a flying object location vector $\{R^i\}_{ecef}$ (where i=1,2,...,N) and a ground control point location vector $\{G^i\}_{ecef}$ (where i=1,2,...,N) of an earth-centered earth-fixed coordinate system.

3. The three-dimensional misalignment correction method according to claim 1, wherein the calculation of the ground control point observation vector includes calculating a ground control point observation vector $\{M^i\}_{ecef}$ (where i=1,2,..., N) by an equation $\{M^i\}_{ecef}=\{L^i\}_{ecef}+\{P^i\}_{ecef}$ (where i=1,2,...,N) using a flying object camera line-of-sight vector $\{L^i\}_{ecef}$ (where i=1,2,...,N) and a relative vector $\{P^i\}_{ecef}$ (where i=1,2,...,N) of an earth-centered earth-fixed coordinate system.

**Patentansprüche**

1. Verfahren zur Korrektur einer dreidimensionalen Fehlausrichtung eines Fluglagesensors unter Verwendung eines Einzelbildes, wobei das Verfahren umfasst:

   - Berechnen eines Referenzvektors $\{V^i\}_{ecef}$ zu einem Kontrollpunkt am Boden;
   - Berechnen eines Beobachtungsvektors $\{M^i\}_{ecef}$ zu dem Kontrollpunkt am Boden unter Verwendung von Bildinformationen;
   - Berechnen einer Fluglagefehlermatrix $C_{mixamim}$ unter Verwendung des Referenzvektors $\{V^i\}_{rcef}$ und des Beobachtungsvektors $\{M^i\}_{rcef}$; und
   - Korrigieren der Fehlausrichtung des Fluglagesensors unter Verwendung der Fluglagefehlermatrix,
   **dadurch gekennzeichnet, dass**
   die Korrektur der Fehlausrichtung des Fluglagesensors die Berechnung einer Fluglagewinkelsensor-Befestigungsmatrix $\widetilde{C}_{body}^{sensor}$ nach der Korrektur anhand einer Gleichung $\widetilde{C}_{body}^{sensor} = C_{body}^{sensor} C_{misalign}$ durch die Korrektur der berechneten Fluglagefehlermatrix $C_{misalign}$ in einer Fluglagewinkelsensor-Befestigungsmatrix $C_{body}^{sensor}$ vor der Korrektur umfasst.

2. Verfahren zur Korrektur einer dreidimensionalen Fehlausrichtung gemäß Anspruch 1, wobei die Berechnung des Referenzvektors die Berechnung eines Referenzvektors $\{V^i\}_{ecef}$ (wobei i=1,2,...,N) anhand der Gleichung $\{V^i\}_{ecef} = \{G^i\}_{ecef} - \{R^i\}_{ecef}$ (wobei i=1,2,...N) unter Verwendung eines Flugobjekt-Ortsvektors $\{R^i\}_{ecef}$ (wobei i=1,2,...N) und eines Ortsvektors $\{G^i\}_{ecef}$ eines Kontrollpunkts am Boden (wobei i=1,2,...,N) eines erdzentrierten, erdfixierten Koordinatensystems umfasst.

3. Verfahren zur Korrektur einer dreidimensionalen Fehlausrichtung gemäß Anspruch 1, wobei die Berechnung des Beobachtungsvektors die Berechnung eines Beobachtungsvektors $\{M^i\}_{ecef}$ (wobei i=1,2,...N) anhand einer Gleichung $\{M'\}_{ecef} = \{L'\}_{ecef} + \{P'\}_{ecef}$ (wobei i=1,2,...N) unter Verwendung eines Sichtlinienvektors $\{L'\}_{ecef}$ zwischen einem Flugobjekt und einer Kamera (wobei i=1,2,...N) und eines relativen Vektors $\{P'\}_{ecef}$ (wobei i=1,2,...N) eines erdzentrierten, erdfixierten Koordinatensystems umfasst.

## Revendications

1. Une méthode de correction d'un désalignement tridimensionnel d'un détecteur d'angle de position d'équilibre à l'aide d'une image simple, la méthode comprenant :

   - le calcul d'un vecteur de référence de point de contrôle au sol $\{V^i\}_{ecef}$ ;
   - le calcul d'un vecteur $\{M^i\}_{ecef}$ d'observation de point de contrôle au sol à l'aide d'information d'une image ;
   - le calcul d'une matrice d'erreur de position d'équilibre $C_{misalign}$ à l'aide du vecteur de référence du point de contrôle au sol $\{V^i\}_{ecef}$ et le vecteur d'observation de point de contrôle au sol $\{M^i\}_{ecef}$ ; et
   - la correction du désalignement du détecteur d'angle de position d'équilibre à l'aide de la matrice d'erreur de position d'équilibre,
   **caractérisé en ce que**
   la correction du désalignement du détecteur d'angle de position d'équilibre inclut le calcul d'une matrice de montage du détecteur d'angle de position d'équilibre $\tilde{C}_{body}^{sensor}$ après la correction par une équation

   $$\tilde{C}_{body}^{sensor} = C_{body}^{sensor} C_{misalign}$$ en corrigeant la matrice d'erreur de position d'équilibre calculée $C_{misalign}$ dans une matrice de montage du détecteur d'angle de position d'équilibre $C_{body}^{sensor}$ avant la correction.

2. La méthode de correction d'un désalignement tridimensionnel selon la revendication 1, où le calcul du vecteur de référence du point de contrôle au sol inclut le calcul d'un vecteur de référence de point de contrôle au sol $\{V^i\}_{ecef}$ (où i=1,2,..., N) par une équation $\{V^i\}_{ecef} = \{G^i\}_{ecef} - \{R^i\}_{ecef}$ (où i=1,2,..., N) à l'aide d'un vecteur d'emplacement d'objet volant $\{R^i\}_{ecef}$ (où i=1,2,..., N) et un vecteur d'emplacement de point de contrôle au sol $\{G^i\}_{ecef}$ (où i=1,2,..., N) d'un système de coordonnées fixées à la terre centrées à la terre.

3. La méthode de correction d'un désalignement tridimensionnel selon la revendication 1, où le calcul du vecteur d'observation du point de contrôle au sol inclut le calcul d'un vecteur d'observation du point de contrôle au sol $\{M^i\}_{ecef}$ (où i=1,2,..., N) par une équation $\{M^i\}_{ecef} = \{L^i\}_{ecef} + \{P^i\}_{ecef}$ (où i=1,2,..., N) à l'aide d'un vecteur de ligne de vue d'une caméra d'un objet volant $\{L^i\}_{ecef}$ (où i=1,2,..., N) et un vecteur relatif $\{P^i\}_{ecef}$ (où i=1,2,..., N) d'un système de coordonnées fixées à la terre centrées à la terre.

FIG. 1

```
                            ┌──────────┐
                            │  Start   │
                            └────┬─────┘
                                 │
              ┌──────────────────┴──────────────────┐
              │                                     │
              ▼                                     ▼
       ┌──────────────┐                      ┌──────────────┐
S100   │ GCP Reference│                      │GCP Observation│   S200
       │Vector Calculaion                    │Vector Calculation
       └──────┬───────┘                      └──────┬───────┘
              │                                     │
              └──────────────────┬──────────────────┘
                                 ▼
                          ┌──────────────┐
S300                      │Attitude Error│
                          │Matrix Calculation
                          └──────┬───────┘
                                 │
                                 ▼
                          ┌────────────────┐
S400                      │Attitude AngleSensor
                          │Missalignment Calculation
                          └──────┬─────────┘
                                 │
                                 ▼
                            ┌──────────┐
                            │   End    │
                            └──────────┘
```

FIG. 2

FIG. 3

**EP 2 199 207 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 6227496 B1